# EUROPEAN PATENT APPLICATION

(11) **EP 2 317 088 A1**
(43) Date of publication of application: **04.05.2011**
(21) Application number: 09754589.1
(22) Date of filing: 19.05.2009
(51) Int. Cl.: F01N 3/02, B01D 53/94, F01N 3/20, F01N 3/24, F01N 3/36, F02D 41/04, B01D 46/42

(54) **EXHAUST GAS PURIFYING SYSTEM FOR INTERNAL COMBUSTION ENGINE AND SOOT FILTER REGENERATING METHOD**

(30) Priority: 29.05.2008 JP 2008140691
(71) Applicant: KOMATSU LTD., Minato-ku, Tokyo 107-0052 (JP)
(72) Inventor: OZAWA Godou, Oyama-shi Tochigi 323-8558 (JP); OGURI Hideo, Oyama-shi Tochigi 323-8558 (JP)
(74) Representative: Grünecker, Kinkeldey, Stockmair & Schwanhäusser Anwaltssozietät
(86) International application number: PCT/JP2009/059162
(87) International publication number: WO 2009/145081

(57) **Abstract**

An exhaust purifying system (1) for an engine (2) includes: a soot filter being provided to a PM filter device (10) to collect PM contained in exhaust gas; a regeneration execution judging unit being provided to a controller (9) to decide whether or not the soot filter should be regenerated; an air-cooled aftercooler (4) that cools intake air being supercharged by a turbocharger (3); a cooling fan (5) that supplies cooling air to the aftercooler (4); and a forced-regeneration fan rotation speed controlling unit being provided to the controller (9) to lower the rotation speed of the cooling fan (5) when the regeneration execution judging unit decides that the soot filter needs to be regenerated.

## Description

### Technical Field

The present invention relates to an exhaust purifying system for an internal combustion engine and a method for regenerating a soot filter, particularly, a technique of regenerating a soot filter for collecting PM (Particular Matter).

### Background Art

It is typically known that post-injection is performed as a technique of regenerating a soot filter used in an exhaust purifying system for an internal combustion engine such as a diesel engine. The post-injection is an injection of extra fuel that is separately performed from a normal fuel injection in an engine. The fuel of the post-injection is oxidized to generate heat with an oxidizing catalyst disposed at an upstream of the soot filter, so that the temperature of exhaust gas entering the soot filter is raised, thereby causing self-combustion of PM accumulated in the soot filter to regenerate the soot filter.

In an idle state where the engine is driven with no load or a light load, the temperature of the exhaust gas from the engine does not reach an activating temperature in the oxidizing catalyst, so that even when the post-injection is performed, the fuel cannot be oxidized to generate heat with the oxidizing catalyst and thus the temperature of the exhaust gas entering the soot filter may not be raised to a regenerating temperature. Accordingly, Patent Literature 1 teaches that the temperature of intake air to be supplied to an engine is raised so as to sufficiently raise the temperature of exhaust gas that has been just discharged from the engine even when a load on an engine is small, so that the fuel of post-injection can be reliably oxidized to generate heat with an oxidizing catalyst.

Specifically, Patent Literature 1 teaches that the intake air is supplied to the engine after passing through the surroundings of an exhaust system so that the intake air is heated by the heat of the exhaust system. Patent Literature 1 also teaches that the heated intake air is supercharged by a turbocharger and is supplied to the engine through an air-cooled aftercooler and that the cooling efficiency (i.e. cooling performance) of the aftercooler is lowered to avoid an unfavorable reduction in the temperature of the intake air when a filter is to be regenerated.

Specifically, a shutter mechanism is provided to control the flow rate of cooling air sent to the aftercooler. When the soot filter is to be regenerated, a shutter is closed to reduce the flow rate of the cooling air to lower the performance of the aftercooler. With this arrangement, the temperature of the intake air heated by the exhaust system is kept high, so that the temperature of the exhaust gas discharged from the engine exceeds the activating temperature in the oxidizing catalyst. Therefore, the fuel of the post injection is favorably oxidized to generate heat with the oxidizing catalyst, thereby reliably raising the temperature of the exhaust gas to a filter-regenerating temperature.

### Citation List

### Patent Literature

Patent Literature: JP-A-2005-299628

### Summary of the Invention

### Problems to Be Solved by the Invention

According to Patent Literature 1, in order to prevent a reduction in the temperature of the intake air passing through the aftercooler, the shutter mechanism for controlling the flow rate of the cooling air supplied to the aftercooler needs to be newly provided, which results in complication in the structure and an increase in cost. In a construction machine designed to be operated, particularly, in a dusty work environment, the durability may be deteriorated on account of, for instance, sand and dust that makes an opening/closing mechanism of the shutter inoperative.

An object of the present invention is to provide an exhaust purifying system for an internal combustion engine and a method for regenerating a soot filter, capable of raising the temperature of intake air to raise the temperature of exhaust gas without using a conventional shutter mechanism.

### Means for Solving the Problems

According to an aspect of the invention, an exhaust purifying system for an internal combustion engine having a supercharger, includes: a soot filter that collects particulate matter contained in exhaust gas; a regeneration execution judging unit that decides whether or not the soot filter should be forcibly regenerated; an air-cooled aftercooler that cools intake air being supercharged by the supercharger; a cooling fan that supplies cooling air to the aftercooler; and a fan rotation speed controlling unit that lowers a rotation speed of the cooling fan when the regeneration execution judging unit decides that the soot filter needs to be forcibly regenerated.
The "rotation speed" means a revolution per minute, which is generally referred to simply as revolution. The expression "lowering a rotation speed" includes stopping the rotation of the cooling fan.

In the exhaust purifying system, it is preferable that the regeneration execution judging unit includes: a differential pressure sensor that detects a differential pressure of the exhaust gas between an upstream side and a downstream side of the soot filter; and a forced-regeneration mode shift judging unit that decides whether or not the soot filter needs to be regenerated depending on the differential pressure detected by the differential pressure sensor.

With the above arrangement, when the regeneration execution judging unit decides that the soot filter needs to be regenerated, the fan rotation speed controlling unit lowers the rotation speed of the cooling fan, so that the cooling efficiency of the aftercooler is lowered to raise the temperature of the intake air. Accordingly, without the conventional shutter mechanism or the like, the temperature of the intake air can be reliably raised, thereby favorably regenerating the soot filter. Additionally, since a complicated mechanism such as the shutter mechanism is not required, the invention is effectively applicable to a construction machine being designed to be operated in a dusty work environment.

The exhaust purifying system preferably further includes a rotation speed change determining unit that determines whether or not to proceed with a process for lowering the rotation speed of the cooling fan.

With the above arrangement, when the temperature of the intake air is excessively raised for some reasons and the temperature of the exhaust gas is so raised as to affect the lifetime of the internal combustion engine, a control for lowering the rotation speed of the fan may not be performed in accordance with the determination of the rotation speed change determining unit so as to avoid adverse effect on the lifetime of the internal combustion engine.

In the exhaust purifying system, it is preferable that the rotation speed change determining unit determines whether or not to proceed with the process for lowering the rotation speed of the cooling fan depending on at least one of a temperature of outside air, a temperature of the intake air, and a temperature of the exhaust gas.

The "intake air temperature", which generally means the temperature of the intake air at the outlet of the aftercooler, includes the temperature of the intake air at the inlet of an intake manifold, and a temperature estimated from the intake manifold or an intake pipe. The "exhaust gas temperature", which generally means the temperature of the exhaust gas on the upstream side of the soot filter, includes a temperature estimated from an exhaust manifold or an exhaust pipe.

With the above arrangement, when any one of the outside air temperature, intake air temperature and exhaust air temperature exceeds a preset temperature, the rotation speed of the cooling fan is not lowered, so that the intake air temperature is not further raised. Thus, it is possible to prevent an excessive rise in the exhaust gas temperature resulting from an excessive rise in the intake air temperature, thereby preventing adverse effect on the lifetime of the internal combustion engine.

In the exhaust purifying system, it is preferable that the cooling fan supplies the cooling air to the aftercooler and a radiator.

With the above arrangement, the single cooling fan is disposed at a position where the cooling fan can simultaneously cool the aftercooler and the radiator. Thus, the exhaust purifying system is favorably applicable to a construction machine that has a limitation in an installation space for equipment or a construction machine that has a swing frame on which an engine is mounted.

The exhaust purifying system preferably further includes: an oxidizing catalyst being provided on an upstream side of the soot filter; and a fuel supply device that supplies fuel to an upstream side of the oxidizing catalyst, in which the fan rotation speed controlling unit lowers the rotation speed of the cooling fan so that a temperature of the exhaust gas that enters the oxidizing catalyst is equal to or higher than an activating temperature in the oxidizing catalyst.

The "fuel" means dosing fuel being used to regenerate the soot filter. When the dosing fuel is designed to be supplied inside the cylinder, the fuel supply device may be provided by a fuel injection device for supplying fuel for driving the engine. On the other hand, when the dosing fuel is designed to be supplied outside the cylinder, the fuel supply device may be provided separately from the fuel injection device. The "activating temperature" means an exhaust gas temperature sufficient for oxidizing the dosing fuel to generate heat with the oxidizing catalyst.

With the above arrangement, the oxidizing catalyst and the fuel supply device enable a rapid and reliable rise in the temperature of the exhaust gas as compared with a case where the oxidizing catalyst and the fuel supply device are not provided, thereby promptly regenerating the soot filter.

The exhaust purifying system preferably further includes: a first exhaust gas temperature detecting unit that detects an exhaust gas temperature on the upstream side of the oxidizing catalyst; and a fuel controlling section that starts supply of the fuel from the fuel supply device when the exhaust gas temperature detected by the first exhaust gas temperature detecting unit exceeds the activating temperature.

With the above arrangement, since the fuel is not supplied until the temperature of the exhaust gas reaches the activating temperature in the oxidizing catalyst, the fuel is less wasted and is reliably oxidized to generate heat with the oxidizing catalyst, so that an unburned fuel is not discharged.

The exhaust purifying system preferably further includes a second exhaust gas temperature detecting unit that detects an exhaust gas temperature on a downstream side of the oxidizing catalyst, in which the fuel controlling section controls an amount of the fuel so that the exhaust gas temperature detected by the second exhaust gas temperature detecting unit is kept at a regenerating temperature for the soot filter.

The "regenerating temperature" means a sufficient exhaust gas temperature for causing self-combustion of the PM accumulated in the soot filter. The oxidizing catalyst is preferably supported in the soot filter to accelerate the self-combustion of the PM.

With the above arrangement, the temperature of the exhaust gas entering the soot filter can be kept at the regenerating temperature under a fuel amount control by the fuel controlling section, thereby stably regenerating the soot filter.

According to another aspect of the invention, a method for regenerating a soot filter of an exhaust purifying system for an internal combustion engine, the exhaust purifying system including: an air-cooled aftercooler that cools intake air being supercharged by a supercharger; a cooling fan that supplies cooling air to the aftercooler; and the soot filter that collects particulate matter contained in exhaust gas, the method includes: lowering a rotation speed of the cooling fan when the soot filter is forcibly regenerated using the exhaust gas from the internal combustion engine.

With the above method of the above aspect of the invention, the temperature of the intake air can be reliably raised by lowering the rotation speed of the cooling fan irrespective of use of the above exhaust purifying system for an internal combustion engine, so that the temperature of the exhaust gas can reach the regenerating temperature. Thus, the soot filter can be favorably regenerated, thereby achieving an object of the invention.

In the method, it is preferable that the rotation speed of the cooling fan is lowered when it is decided that the soot filter needs to be regenerated, fuel is supplied to an upstream side of an oxidizing catalyst being provided on an upstream side of the soot filter when a temperature of the exhaust gas that enters the oxidizing catalyst exceeds an activating temperature in the oxidizing catalyst, and the supply of the fuel is stopped after combustion of the particulate matter collected in the soot filter.

With the above method, when regeneration of the soot filter is necessary, the rotation speed of the cooling fan that supplies the cooling air to the aftercooler may be lowered to lower the performance of the aftercooler. Accordingly, without using a complicated structure having the conventional shutter mechanism, the temperature of the intake air and the temperature of the exhaust gas can be reliably raised, thereby favorably regenerating the soot filter.

Since the exhaust gas entering the oxidizing catalyst is heated to a high temperature around the regenerating temperature by lowering the rotation speed of the cooling fan, even a small amount of the dosing fuel is sufficient for reliably raising the temperature of the exhaust gas to the regenerating temperature, thereby reducing fuel consumption.

The method preferably further includes determining whether or not to proceed with a process for lowering the rotation speed of the cooling fan depending on at least one of a temperature of outside air, a temperature of the intake air, and a temperature of the exhaust gas.

With the above arrangement, when any one of the outside air temperature, intake air temperature and exhaust air temperature exceeds a preset temperature, the rotation speed of the cooling fan is not lowered, so that the intake air temperature is not further raised. Thus, it is possible to prevent an excessive rise in the exhaust gas temperature resulting from an excessive rise in the intake air temperature, thereby preventing adverse effect on the lifetime of the internal combustion engine.

### Brief Description of Drawings

Fig. 1 is a block diagram schematically illustrating the entire structure of an exhaust purifying system according to a first exemplary embodiment of the invention.
Fig. 2 is a cross-sectional view schematically illustrating a PM filter device.
Fig. 3 is a block diagram schematically illustrating a controller.
Fig. 4 shows examples of controls in a normal operation mode and a forced-regeneration mode.
Fig. 5 is a flow chart showing a control flow in the controller for regenerating a soot filter.
Fig. 6 is a block diagram schematically illustrating a controller according to a second exemplary embodiment of the invention.
Fig. 7 is a flow chart showing a control flow according to the second exemplary embodiment.
Fig. 8 is a block diagram schematically illustrating the entire structure of an exhaust purifying system according to a third exemplary embodiment of the invention. Mode for Carrying Out the Invention

### First Exemplary Embodiment

Exemplary embodiments of the invention will be described below with reference to the attached drawings.

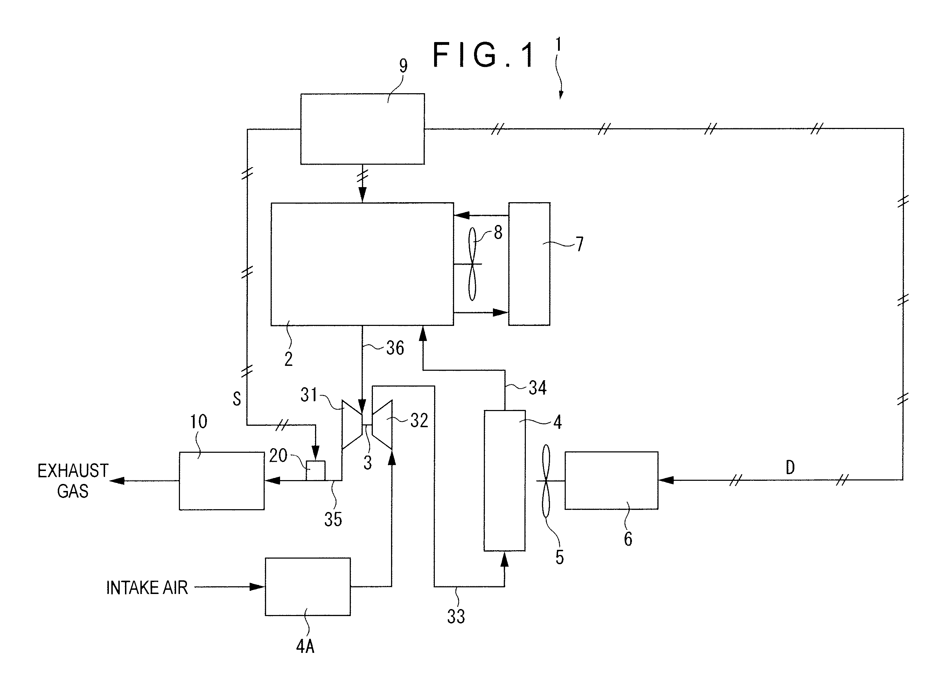

Fig. 1 is a block diagram schematically illustrating the entire structure of an exhaust purifying system 1 according to this exemplary embodiment. The exhaust purifying system 1, which is a system for collecting PM contained in exhaust gas from an engine 2 as an internal combustion engine, includes a PM filter device 10.

The engine 2 of this exemplary embodiment is assumably a diesel engine. The engine 2 is provided with a supercharger, i.e., a turbocharger 3, via an exhaust manifold (not shown). The turbocharger 3 includes a turbine 31 being driven with exhaust gas from the engine 2 and a compressor 32 being turned as the turbine 31 is driven. An intake air outlet of the turbocharger 3 near the compressor 32 is connected to an aftercooler 4 via an intake pipe 33.

The aftercooler 4 is connected to the engine 2 via an intake pipe 34 and an intake manifold (not shown). Intake air sucked via an air cleaner 4A is supercharged by the compressor 32 of the turbocharger 3 and is supplied to the engine 2 through the aftercooler 4 designed to be cooled by air. A cooling fan 5 is disposed to be opposite to the aftercooler 4.

The cooling fan 5 is driven by a driver 6 such as a hydraulic motor or an electric motor. The cooling fan 5 can be disposed at any position and therefore may be disposed at a position shifted from the position shown in Fig. 1 as long as cooling air can be supplied to the aftercooler 4 through a duct or any other guide unit. Cooling water for the engine 2 designed to be cooled by water is cooled by a radiator 7. Cooling air is supplied to the radiator 7 by a cooling fan 8 being directly driven by the engine 2.
Incidentally, cooling air from the cooling fans 5 and 8 may flow through on either the air-suction sides or air-discharge sides of the aftercooler 4 and the radiator 7, and therefore the cooling air may flow through on either sides depending on the layout of the inside of an engine room.

A controller 9, which uses, for instance, a common rail system, controls a fuel injection amount to the engine 2 or the like. The controller 9 also controls a fuel supply device 20 for dosing injection and the driver 6 for the cooling fan 5 that supplies cooling air to the aftercooler 4, both of which are included in the exhaust purifying system 1. Incidentally, the cooling fan 5 for supplying cooling air to the aftercooler 4 and the driver 6 for driving the cooling fan 5 are normally mounted on a construction machine or the like.
The fuel supply device 20 is provided with a nozzle for injecting dosing fuel (e.g., light oil) into an exhaust pipe 35, a flow rate control valve for controlling the flow rate of the dosing fuel, and the like.

The exhaust purifying system 1 includes, in addition to the PM filter device 10 and the fuel supply device 20, the aftercooler 4, the cooling fan 5, the driver 6 that drives the cooling fan 5, and the controller 9.

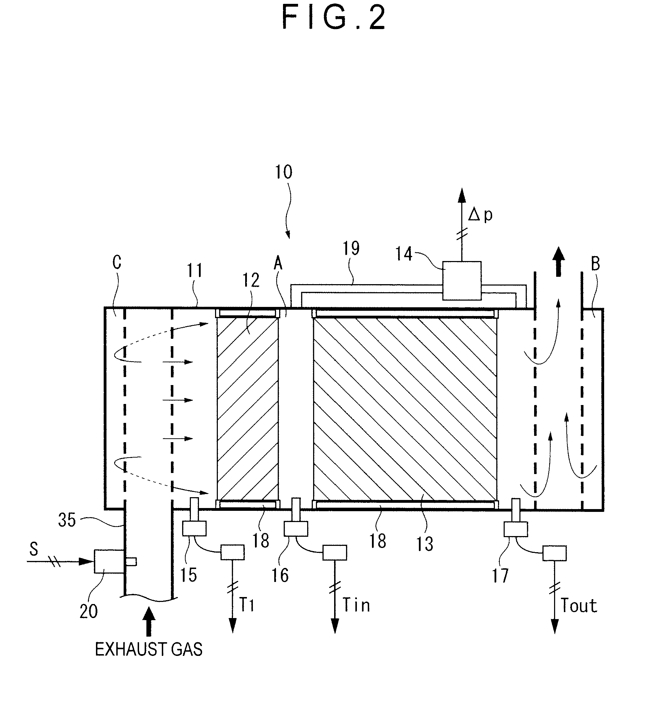

Fig. 2 illustrates the cross section of the PM filter device 10. The PM filter device 10 is provided with an oxidizing catalyst 12 and a soot filter 13 for collecting PM, which are enclosed in a cylindrical enclosure 11 and are arranged in sequence from the upstream side of the flow of exhaust gas.

The oxidizing catalyst 12 is a catalyst through which the dosing fuel supplied by the fuel supply device 20 is oxidized to generate heat. An activating temperature (i.e., a sufficient temperature for fuel to be oxidized to generate heat) in the oxidizing catalyst 12 is approximately 250 degrees C (which is the temperature of the exhaust gas). The exhaust gas, the temperature of which is raised due to the heat generated in the oxidizing catalyst 12, serves to cause self-combustion of PM accumulated in the soot filter 13. Incidentally, the fuel supply device 20 is disposed in the middle of the exhaust pipe 35 that communicates the exhaust gas outlet of the turbine side of the turbocharger 3 and the PM filter device 10.

The soot filter 13, illustration of which is omitted, has multiple apertures. Each of the apertures penetrates from the inflow side to outflow side of the soot filter 13, the cross section of which is a polygonal shape (e.g., a hexagonal shape). The apertures include first apertures being opened on the inflow side and sealed on the outflow side and second apertures being sealed on the inflow side and opened on the outflow side, the first apertures and second apertures being alternately arranged so that the exhaust gas that enters through the first apertures is discharged through the second apertures on the outflow side after passing through boundary walls. PM is collected on the boundary walls. The material of the soot filter 13 is appropriately selected depending on usage from a ceramic such as cordierite or silicon carbide and a metal such as stainless or aluminum. Incidentally, the inflow side of the soot filter 13 may be coated with an oxidizing catalyst by wash coat or the like.

The PM filter device 10 is also provided with a differential pressure sensor 14, a temperature sensor 15 as the first exhaust gas temperature detecting unit, temperature sensors 16 and 17 as the second exhaust gas temperature detecting units, and a heat insulator 18. A detection signal from each of the sensors 14 to 17 is outputted to the controller 9.

The differential pressure sensor 14 that is used to detect a differential pressure Δp of the exhaust gas between the inflow side and outflow side of the soot filter 13 is attached to a pipe 19 that communicates a space A and a space B defined in the PM filter device 10. The space A is defined between the outflow side of the oxidizing catalyst 12 and the inflow side of the soot filter 13. The space B is defined on the outflow side of the soot filter 13.

The temperature sensor 15 that is used to detect an exhaust gas temperature T₁ on the inflow side of the oxidizing catalyst 12 is attached at a position corresponding to a space C defined in the enclosure 11 of the PM filter device 10 on the inflow side of the oxidizing catalyst 12.
The temperature sensor 16 that is used to detect an exhaust gas temperature Tᵢₙ on the inflow side of the soot filter 13 is attached at a position corresponding to the space A in the enclosure 11.
The temperature sensor 17 that is used to detect an exhaust gas temperature Tₒᵤₜ on the outflow side of the soot filter 13 is attached at a position corresponding to the space B.

The heat insulator 18 that is used to prevent heat loss to the outside of the oxidizing catalyst 12 and the soot filter 13 so that the temperatures inside the oxidizing catalyst 12 and the soot filter 13 are not decreased is disposed between the inner wall of the enclosure 11 and each of the oxidizing catalyst 12 and the soot filter 13. The heat insulator 18 also functions as a member for absorbing vibrations acting on the enclosure 11.

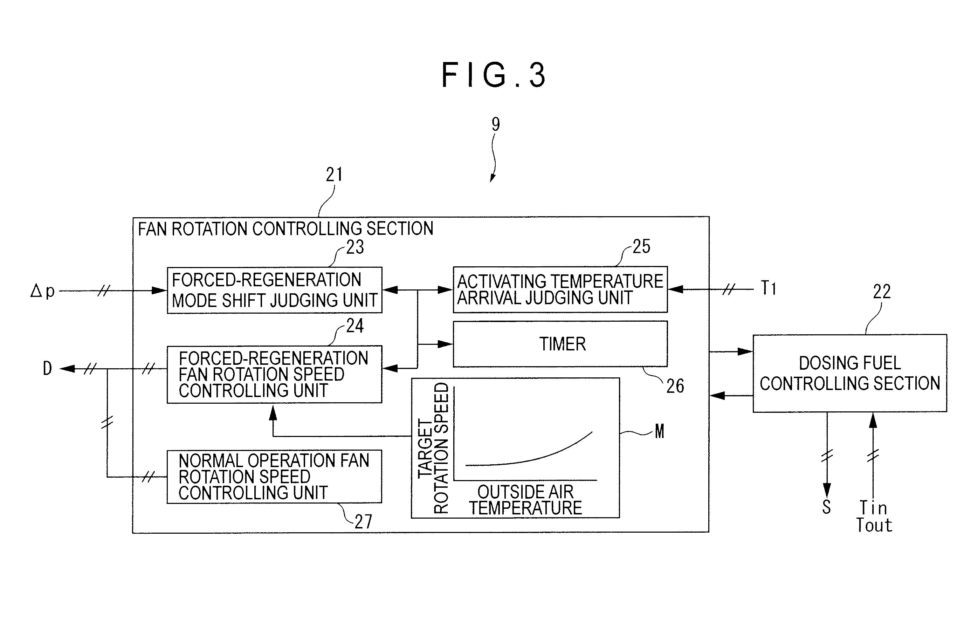

Fig. 3 is a block diagram schematically illustrating the controller 9. The controller 9 includes, in addition to an engine fuel controlling section (not shown) for controlling the injection amount of fuel supplied to the engine 2, a fan rotation controlling section 21 for controlling the driver 6 to change the rotation speed of the cooling fan 5, and a dosing fuel controlling section 22 as the fuel controlling section for controlling the amount of the dosing fuel supplied from the fuel supply device 20.

The fan rotation controlling section 21 is adapted to lower the rotation speed of the cooling fan 5 as necessary when regeneration of the soot filter 13 is required. In this manner, the aftercooler 4 cools the intake air with less efficiency, thereby raising the temperature of the intake air supplied to the engine 2, and, consequently, raising the temperature of the exhaust gas flowing through the oxidizing catalyst 12. As a result, even when the engine 2 runs in an idle state or in a light load state, the temperature of the exhaust gas can be raised to the activating temperature in the oxidizing catalyst, so that the dosing fuel can be reliably oxidized to generate heat with the oxidizing catalyst 12, thereby further raising the temperature of the exhaust gas to the regenerating temperature for the soot filter 13 to enable the soot filter 13 to be forcibly regenerated.

Specifically, forced-regeneration means raising the exhaust gas temperatures T₁ and T₂ upon determination that the soot filter 13 needs to be regenerated to cause combustion of the PM collected in the soot filter 13. The control for lowering the rotation speed of the cooling fan 5 to cause forced-regeneration corresponds to a control in a forced-regeneration mode, which is one of rotation speed control modes. In contrast, a control for setting the rotation speed of the cooling fan 5 at a target rotation speed so as not to raise the temperature of the intake air beyond a predetermined level while the engine 2 is driven corresponds to a control in a normal operation mode, which is another rotation speed control mode.

The dosing fuel controlling section 22 monitors the detection signals from the temperature sensor 16 on the inflow side of the soot filter 13 and the temperature sensor 17 on the outflow side of the soot filter 13 and averages the exhaust gas temperatures Tᵢₙ and Tₒᵤₜ based on the detection signals to calculate an exhaust gas temperature T₂. The dosing fuel controlling section 22 determines the amount of the dosing fuel through feedback control of the exhaust gas temperature T₂ so that the exhaust gas temperature T₂ is kept at the regenerating temperature for the soot filter 13, and outputs to the fuel supply device 20 a control signal S indicating the determined amount of the dosing fuel.

Description will be made below on a specific structure of the fan rotation controlling section 21. The fan rotation controlling section 21 includes a forced-regeneration mode shift judging unit 23, a forced-regeneration fan rotation speed controlling unit 24 as the fan rotation speed controlling unit, an activating temperature arrival judging unit 25, a timer 26, and a normal operation fan rotation speed controlling unit 27. Each of the units 23 to 27 is provided by computer-executable software (a computer program).

The forced-regeneration mode shift judging unit 23 monitors the detection signal from the differential pressure sensor 14 to decide that the soot filter 13 needs to be regenerated when the differential pressure Δp exceeds a preset regeneration start determination value ΔP (i.e., when the amount of the PM collected in the soot filter 13 exceeds the maximum collectable amount). The forced-regeneration mode shift judging unit 23 then switches control of the rotation speed of the cooling fan 5 from a routine in the normal operation mode that is controlled by the normal operation fan rotation speed controlling 27 to a routine in the forced-regeneration mode that is controlled by the forced-regeneration fan rotation speed controlling unit 24. The forced-regeneration mode shift judging unit 23 and the differential pressure sensor 14 constitute the regeneration execution judging unit of the present invention. Incidentally, as described later, when forced-regeneration is executed by a manual operation of a switch by an operator, the forced-regeneration mode shift judging unit 23 that monitors a forced-regeneration signal from this switch constitutes the regeneration execution judging unit of the present invention.

The forced-regeneration fan rotation speed controlling unit 24 switches from a map for the normal operation mode (i.e., a map for determining the rotation speed of the cooling fan 5 depending on the operation state of the engine 2) to a map M for forced-regeneration, and generates a driving signal D based on the target rotation speed obtained from the map M to control the driver 6 for the cooling fan 5 in accordance with the driving signal D.
As shown in Fig. 3, the map M is used to determine the target rotation speed of the cooling fan 5 depending on, for instance, an outside air temperature Tₐᵢᵣ during forced-regeneration. The target rotation speed obtained from the map M is a rotation speed sufficient for lowering the cooling efficiency of the aftercooler 4 to raise the temperature of the intake air, at which the exhaust gas temperature T₁ on the inflow side of the oxidizing catalyst 12 exceeds the activating temperature as long as the engine 2 is driven with no load or a light load.

The activating temperature arrival judging unit 25 decides whether or not the exhaust gas temperature T₁ on the upstream side of the oxidizing catalyst 12 reaches the activating temperature in the oxidizing catalyst 12 (approximately 250 degrees C). When the exhaust gas temperature is equal to or higher than the activating temperature, the activating temperature arrival judging unit 25 outputs to the dosing fuel controlling section 22 a command for injecting the dosing fuel. Upon receiving this command, the dosing fuel controlling section 22 outputs the control signals to the fuel supply device 20 so that the dosing fuel is injected by the fuel supply device 20 for a predetermined time. The injection time is measured by the timer 26.

The normal operation fan rotation speed controlling unit 27 keeps the rotation speed of the cooling fan 5 at the target rotation speed where the temperature of the intake air is prevented from rising beyond the predetermined level when the engine 2 is driven in the normal operation mode. Specifically, the normal operation fan rotation speed controlling unit 27 regulates the discharge rate of a hydraulic pump that supplies a hydraulic oil to the hydraulic motor that drives the cooling fan 5 so that the hydraulic motor is rotated at the target rotation speed.

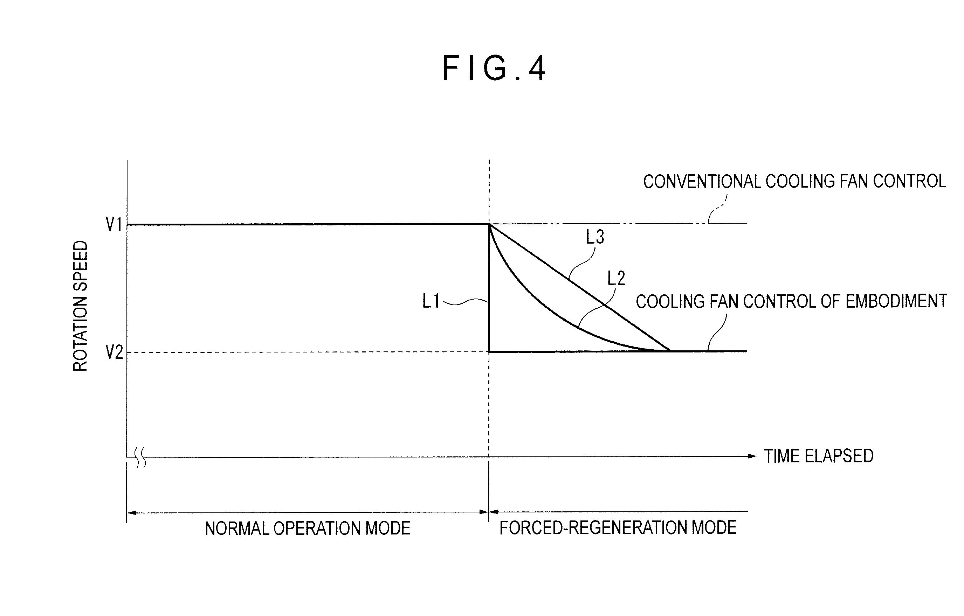

More specifically, the target rotation speed of the cooling fan 5 in the normal operation mode is set at, for instance, a target rotation speed V1 as shown in Fig. 4 and the normal operation fan rotation speed controlling unit 27 executes feedback control so that the actual rotation speed of the cooling fan 5 becomes the target rotation speed V1.
Thus, when a deviation occurs between the target rotation speed V1 and the actual rotation speed, a rotation speed command corresponding to this deviation is outputted to control the discharge rate of the hydraulic pump. In other words, in the normal operation mode, even though the rotation speed of the cooling fan 5 is changed by an amount corresponding to the deviation between the target rotation speed V1 and the actual rotation speed, the change is so small that the rotation speed of the cooling fan 5 is basically kept at a constant rotation speed, i.e. the target rotation speed V1.

Typically, the normal operation fan rotation speed controlling unit 27 has set the rotation speed of the cooling fan 5 at the target rotation speed V1 as shown by a two-doted chain line in Fig. 4 even when the soot filter 13 needs to be forcibly regenerated.

In contrast, in the forced-regeneration mode of this exemplary embodiment, the forced-regeneration fan rotation speed controlling unit 24 is actuated in place of the normal operation fan rotation speed controlling unit 27, so that the rotation speed of the cooling fan 5 is preferentially controlled by the forced-regeneration fan rotation speed controlling unit 24. Specifically, when forced-regeneration is decided to be necessary, the target rotation speed of the cooling fan 5 is set at a low target rotation speed V2 being obtained from the map M in accordance with the outside air temperature Tₐᵢᵣ, so that the actual rotation speed is lowered to the target rotation speed V2. In this manner, the temperature of the intake air can be reliably raised, thereby raising the exhaust gas temperature T₁ to the activating temperature.

The rotation speed of the cooling fan 5 may be lowered to the target rotation speed V2 obtained from the map M in any manner such as rapidly reducing a driving energy to the driver 6 (electric current to an electric motor, an oil flow rate to a hydraulic motor, or the like) so that the rotation speed of the cooling fan 5 is instantaneously lowered to the target rotation speed V2 as shown by a line L1 in Fig. 4, gradually reducing to the target second speed V2 along a curve as shown by a line L2, or reducing to the target second speed V2 at a constant rate as time elapses as shown by a line L3.

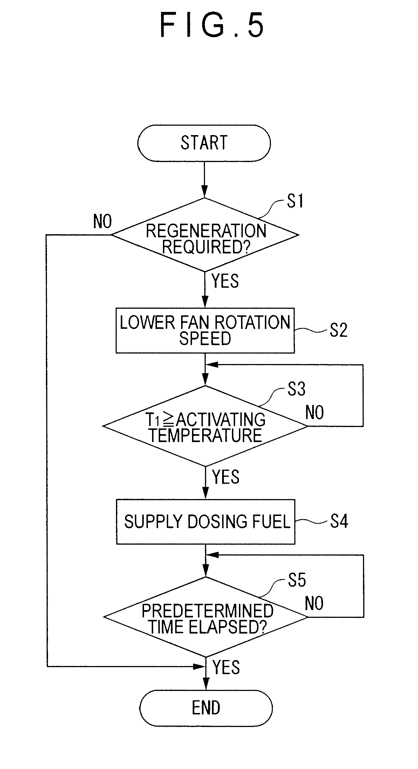

Fig. 5 is a flow chart showing a control flow in the controller 9 for forced-regeneration of the soot filter 13. With reference to this flow chart, description will be made below on control of the cooling fan 5 for forcibly regenerating the soot filter 13.

In Fig. 5, the forced-regeneration mode shift judging unit 23 in the fan rotation controlling section 21 initially monitors the differential pressure Δp between the upstream side and downstream side of the soot filter 13 and compares the differential pressure Δp with the regeneration start determination value ΔP. When the differential pressure Δp is equal to or smaller than the regeneration start determination value ΔP, the forced-regeneration mode shift judging unit 23 decides that regeneration of the soot filter 13 is not necessary. Conversely, when the differential pressure Δp exceeds the regeneration start determination value ΔP, the forced-regeneration mode shift judging unit 23 decides that regeneration of the soot filter 13 is necessary (S1).

When regeneration of the soot filter 13 is decided to be necessary in S1, the forced-regeneration fan rotation speed controlling unit 24 obtains the target rotation speed of the cooling fan 5 from the map M in accordance with the outside air temperature Tₐᵢᵣ to generate and output a driving command corresponding to the obtained target rotation speed so that the driver 6 is driven at a lower speed, thereby lowering the performance of the aftercooler 4 (S2). In this manner, the temperature of the intake air is raised, and, consequently, the exhaust gas temperature T₁ on the upstream side of the oxidizing catalyst 12 is raised.

Subsequently, the activating temperature arrival judging unit 25, which has monitored the exhaust gas temperature T₁ on the upstream side of the oxidizing catalyst 12, decides whether or not the exhaust gas temperature T₁ reaches the activating temperature for the dosing fuel (S3). When the exhaust gas temperature T₁ reaches the activating temperature, the dosing fuel controlling section 22 is actuated to output the control signal S to the fuel supply device 20 for controlling the amount of the dosing fuel (S4). Specifically, the dosing fuel controlling section 22 controls the amount of the dosing fuel for the predetermined time so that the exhaust gas temperature T₂ calculated from the exhaust gas temperatures Tᵢₙ and Tₒᵤₜ becomes the regenerating temperature for the soot filter 13, thereby causing combustion of the PM collected in the soot filter 13. Such a supply time of the dosing fuel is measured by the timer 26 so that the supply of the dosing fuel is stopped after a predetermined time is elapsed (S5). Here, the "predetermined time" is a time sufficient for combusting substantially all the collected PM, which is preset in the program.

As described above, according to this exemplary embodiment, when regeneration of the soot filter 13 is necessary, the rotation speed of the cooling fan 5 that supplies cooling air to the aftercooler 4 is lowered, thereby lowering the performance of the aftercooler 4. Accordingly, without using a complicated structure having a conventional shutter mechanism, the temperature of the intake air and the temperature of the exhaust gas can be reliably raised, thereby favorably regenerating the soot filter 13.

Since the exhaust gas that enters the oxidizing catalyst 12 is heated to a high temperature around the regenerating temperature by lowering the rotation speed of the cooling fan 5, even a small amount of the dosing fuel is sufficient for reliably raising the temperature of the exhaust gas to the regenerating temperature, thereby reducing fuel consumption.

### Second Exemplary Embodiment

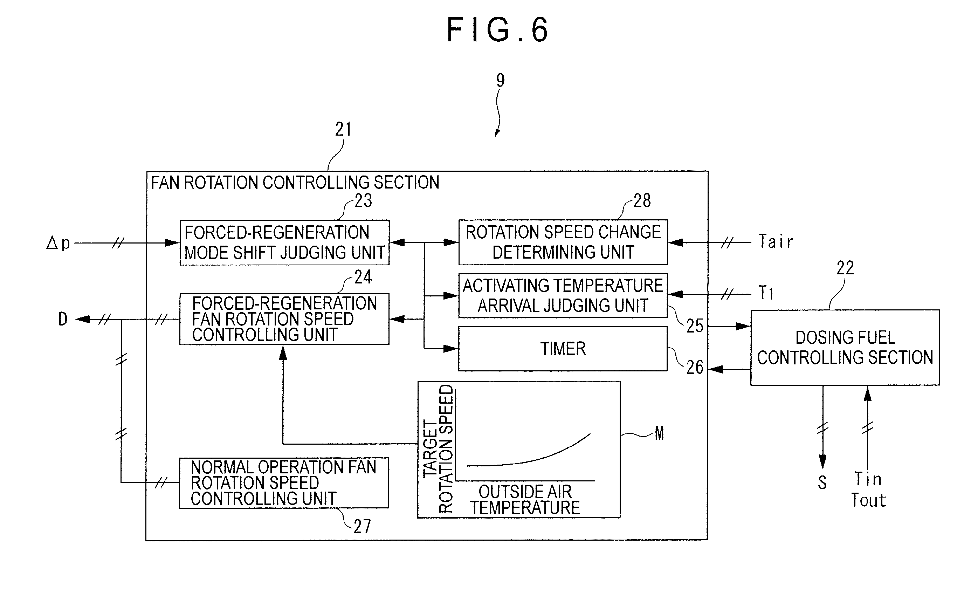

A second exemplary embodiment is considerably different from the first exemplary embodiment in that a rotation speed change determining unit 28 is provided to the fan rotation controlling section 21 as shown in Fig. 6. The rotation speed change determining unit 28 determines whether or not the rotation speed of the cooling fan 5 should be lowered in the forced-regeneration mode.

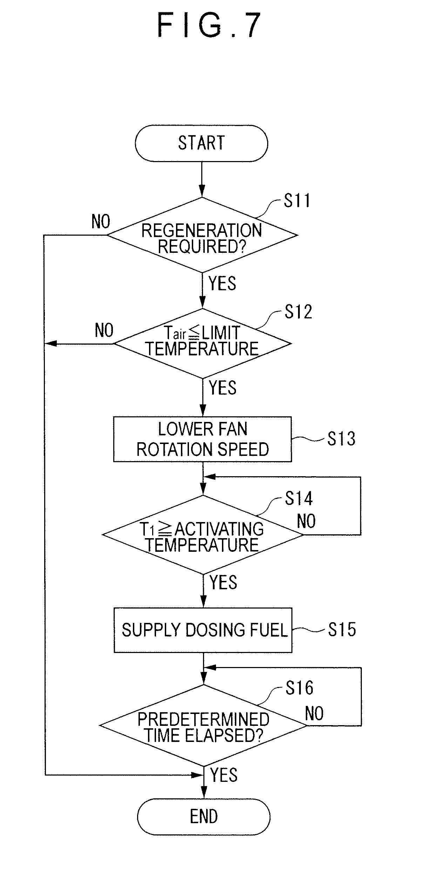

Specifically, as illustrated in a flow chart of Fig. 7, the rotation speed change determining unit 28 monitors the outside air temperature Tₐᵢᵣ indicated by a detection signal from an outside air sensor (not shown) and compares the outside air temperature Tₐᵢᵣ with a preset temperature, i.e., a limit temperature at which a fan control for forced-regeneration leads to decrease in the durability of the engine 2 (S12).
When the outside air temperature Tₐᵢᵣ is equal to or higher than the limit temperature, the rotation speed change determining unit 28 determines not to proceed with a process for lowering the rotation speed of the cooling fan 5 so that the rotation speed of the cooling fan 5 is not lowered. Conversely, when the outside air temperature Tₐᵢᵣ is below the limit temperature, the rotation speed change determining unit 28 advances the process to S 13 where the rotation speed of the cooling fan 5 is lowered by the forced-regeneration fan rotation speed controlling unit 24.

Incidentally, steps other than S12 in Fig. 7, i.e., S11 and S13 to S16, are respectively the same as S1 to S5 in Fig. 5, description of which is omitted here.
A temperature used as a criterion to determine whether or not the rotation speed of the cooling fan 5 should be lowered is not limited to the outside air temperature Tₐᵢᵣ, but may be the temperature of the intake air or the temperature of the exhaust gas that is measured at an appropriate spot. Alternatively, these temperatures may not be measured temperatures but estimated temperatures from temperatures measured at appropriate spots.

According to this exemplary embodiment, since the rotation speed change determining unit 28 prevents an excessive rise in the temperature of the exhaust gas, decrease in the durability of the engine 2 can be prevented.

### Third Exemplary Embodiment'

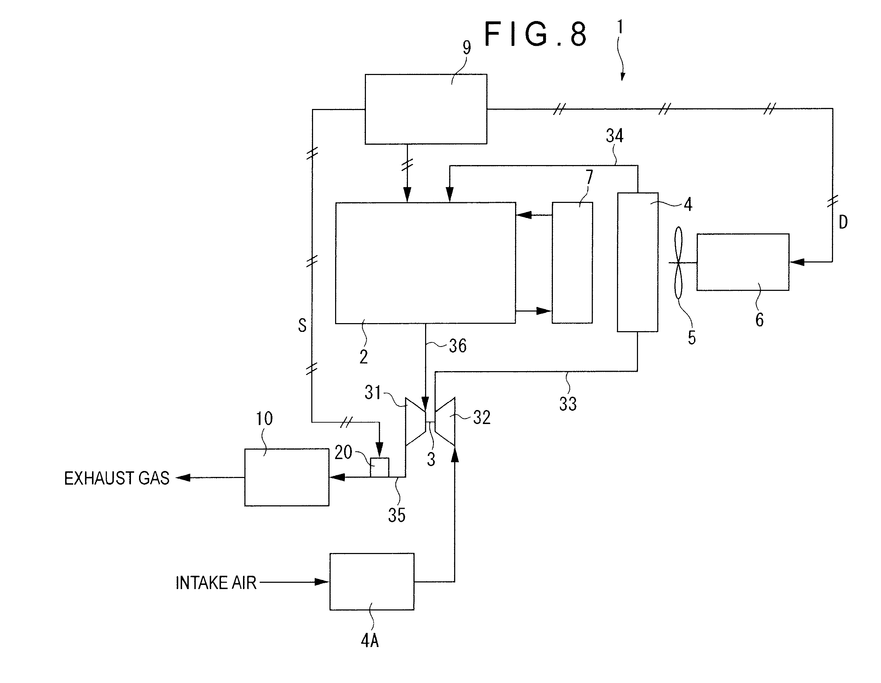

A third exemplary embodiment, as shown in Fig. 8, is considerably different from the above-described first and second exemplary embodiments in that the cooling air from the cooling fan 5 driven by the driver 6 is used to cool the radiator 7 in addition to the aftercooler 4. In the third exemplary embodiment, though the cooling fan 8 (Fig. 1) driven by the engine 2 is omitted, the cooling fan 8 may be provided in the same manner as in the first exemplary embodiment. The other components, method for controlling, and the like may be the same as those in the first and second exemplary embodiments.

With such an arrangement, in order to regenerate the soot filter 13, the rotation speed of the cooling fan 5 is lowered in the forced-regeneration mode to raise the temperature of the intake air, and, consequently, the temperature of the exhaust gas is raised in the same manner as in the first and second exemplary embodiments. Thus, the same advantages as those in the first exemplary embodiment can be attained.

According to the layout of this exemplary embodiment, the single cooling fan 5 can be used to cool the aftercooler 4 and the radiator 7 at the same time. Thus, this exemplary embodiment is favorably applicable to a construction machine that has a limitation in an installation space for equipment, which is exemplified by a construction machine where an engine and a PM filter are mounted above a vehicle frame, or a construction machine that has a swing frame on which an engine is mounted.

Incidentally, in this exemplary embodiment, the cooling efficiency of the radiator 7 is also reduced by lowering the rotation speed of the cooling fan 5. Since the forced-regeneration mode is usually selected when the engine 2 is driven with no load or a light load, such a reduction in the cooling efficiency of the radiator 7 can hardly have an actual influence on cooling of the engine 2.

Incidentally, the best arrangements, methods and the like for carrying out the invention are disclosed above, but the invention is not limited thereto. In other words, while the invention has been particularly explained and illustrated mainly in relation to specific embodiments, a person skilled in the art could make various modifications in terms of shape, quantity or other particulars to the above described embodiment without deviating from the technical idea or any object of the present invention.
Accordingly, any descriptions of shape or quantity or the like disclosed above are given as examples to enable easy understanding of the invention, and do not limit the present invention, so that descriptions using names of components, with any such limitations of shape or quantity or the like removed in part or whole, are included in the present invention.

For instance, though the rotation speed change determining unit 28 compares the outside air temperature Tₐᵢᵣ with the limit temperature so as to determine whether or not the rotation speed of the cooling fan 5 should actually be lowered in the second exemplary embodiment, any one or a combination of two or more of the outside air temperature Tₐᵢᵣ, intake air temperature, and exhaust gas temperature may be checked so as to determine whether or not the rotation speed of the cooling fan 5 should be lowered.

The rotation speed of the cooling fan 5 in the forced-regeneration mode, which is determined from the map M in accordance with the outside air temperature Tₐᵢᵣ in the above exemplary embodiments, may be lowered to a predetermined rotation speed without using the map M, i.e., irrespective of the outside air temperature Tₐᵢᵣ. With this arrangement, when the outside air temperature Tₐᵢᵣ is high, the exhaust gas temperature T₁ is significantly raised by lowering the rotation speed of the cooling fan 5 and therefore the temperature of the exhaust gas can be easily raised to the regenerating temperature for the soot filter 13 with a small amount of the dosing fuel, thereby improving fuel consumption.

Though the temperature sensor 15 is provided as the first exhaust gas temperature detecting unit and the temperature sensors 16 and 17 are provided as the second exhaust gas temperature detecting units in the above exemplary embodiments, the exhaust gas temperature detecting units of the invention are not limited to the temperature sensors 15 to 17 that measure the temperatures of the exhaust gas, but may be an estimating unit that estimates an exhaust gas temperature at a predetermined point based on an outside air temperature or intake air temperature, or, alternatively, an exhaust gas temperature at a certain point. Such a unit is exemplified by a table where an exhaust gas temperature measured at a predetermined point is associated with the other temperatures measured at the predetermined point.

Though the forced-regeneration mode shift judging unit 23 compares the differential pressure Δp of the exhaust gas between the upstream side and the downstream side of the soot filter 13 with the regeneration start determination value ΔP so that the forced-regeneration is automatically performed when the differential pressure Δp exceeds the regeneration start determination value ΔP, a warning or the like may be given when the differential pressure Δp exceeds the regeneration start determination value ΔP. With this arrangement, upon receiving this warning, an operator can manually switch to the forced-regeneration mode. In an alternative arrangement, the operator may voluntarily switch to the forced-regeneration mode irrespective of the differential pressure Ap and the regeneration start determination value ΔP. In the arrangements where the operator can manually switch, a mode selection switch for switching to the forced-regeneration mode is provided. When the forced-regeneration mode is selected using this switch, a forced-regeneration signal is outputted from the switch to the forced-regeneration mode shift judging unit 23 of the controller 9. The control of the fan rotation speed for the forced-regeneration is started in response to the forced-regeneration signal.

Though the dosing fuel is supplied to the oxidizing catalyst 12 to raise the temperature of the exhaust gas that enters the soot filter 13 to the regenerating temperature or higher in the above exemplary embodiments, the oxidizing catalyst 12, the fuel supply device 20 for the dosing fuel, the dosing fuel controlling section 22 and the like are not essential elements for the present invention but may be omitted. Even without these elements, in order to regenerate the soot filter 13, the rotation speed of the cooling fan 5 may be lowered to raise the temperature of the exhaust gas that enters the soot filter 13 to the regenerating temperature or higher. Particularly, at a place whose outside air temperature is high, it is expected that the exhaust gas temperature can be raised to the regenerating temperature without dosing, for instance, by stopping the cooling fan 5.

Though the fuel injection device 20 is provided to supply the dosing fuel into the exhaust pipe 35 at the outside of the cylinder to raise the temperature of the exhaust gas for causing the forced-regeneration of the soot filter 13 in the above exemplary embodiments, the arrangement is not limited thereto. For instance, the temperature of the exhaust gas may be raised by delaying the timing of fuel injection in the diesel engine as compared with the normal timing of fuel injection (i.e., a so-called "retard" technique), by reducing the amount of air sucked into the cylinder, or the like.

Though the temperature of the intake air and, consequently, the exhaust gas temperature T₁ are raised only by lowering the rotation speed of the cooling fan 5 in the above exemplary embodiments, the exhaust gas temperature T₁ may be raised by a combination of lowering the rotation speed of the cooling fan 5 and reducing the amount of the intake air entering the cylinder.

Though the turbocharger 3 is used as the supercharger of the present invention in the above exemplary embodiments, the supercharger of the present invention may alternatively be a supercharger driven by an electric motor or a supercharger driven using engine power.

### Industrial Applicability

The present invention is favorably applicable to an exhaust purifying system for an internal combustion engine and a method for regenerating a soot filter, the internal combustion engine and the soot filter being mounted on a work machine or other vehicles being designed to be operated in a dusty work environment.

### Explanation of Codes

1 ... exhaust purifying system, 2 ... engine as internal combustion engine, 3 ... turbocharger, 4... aftercooler, 5 ... cooling fan, 12... oxidizing catalyst, 13 ... soot filter, 14...differential pressure sensor, 15 ... temperature sensor as first exhaust gas temperature detecting unit, 16, 17...temperature sensor as second exhaust gas temperature detecting unit, 20... fuel supply device, 22... dosing fuel controlling section, 23 ... forced-regeneration mode shift judging unit, 24... forced-regeneration fan rotation speed controlling unit, 28 ... rotation speed change determining unit, T₁, T₂, Tᵢₙ, Tₒᵤₜ ... exhaust gas temperature

## Claims

1. An exhaust purifying system for an internal combustion engine having a supercharger, the exhaust purifying system comprising:
a soot filter that collects particulate matter contained in exhaust gas;
a regeneration execution judging unit that decides whether or not the soot filter should be forcibly regenerated;
an air-cooled aftercooler that cools intake air being supercharged by the supercharger;
a cooling fan that supplies cooling air to the aftercooler; and
a fan rotation speed controlling unit that lowers a rotation speed of the cooling fan when the regeneration execution judging unit decides that the soot filter needs to be forcibly regenerated.

2. The exhaust purifying system according to claim 1, wherein
the regeneration execution judging unit includes:
a differential pressure sensor that detects a differential pressure of the exhaust gas between an upstream side and a downstream side of the soot filter; and
a forced-regeneration mode shift judging unit that decides whether or not the soot filter needs to be regenerated depending on the differential pressure detected by the differential pressure sensor.

3. The exhaust purifying system according to claim 1, further comprising
a rotation speed change determining unit that determines whether or not to proceed with a process for lowering the rotation speed of the cooling fan.

4. The exhaust purifying system according to claim 3, wherein
the rotation speed change determining unit determines whether or not to proceed with the process for lowering the rotation speed of the cooling fan depending on at least one of a temperature of outside air, a temperature of the intake air, and a temperature of the exhaust gas.

5. The exhaust purifying system according to claim 1, wherein
the cooling fan supplies the cooling air to the aftercooler and a radiator.

6. The exhaust purifying system according to any one of claims 1 to 5, further comprising:
an oxidizing catalyst being provided on an upstream side of the soot filter; and
a fuel supply device that supplies fuel to an upstream side of the oxidizing catalyst, wherein
the fan rotation speed controlling unit lowers the rotation speed of the cooling fan so that a temperature of the exhaust gas that enters the oxidizing catalyst is equal to or higher than an activating temperature in the oxidizing catalyst.

7. The exhaust purifying system according to claim 6, further comprising:
a first exhaust gas temperature detecting unit that detects an exhaust gas temperature on the upstream side of the oxidizing catalyst; and
a fuel controlling section that starts supply of the fuel from the fuel supply device when the exhaust gas temperature detected by the first exhaust gas temperature detecting unit exceeds the activating temperature.

8. The exhaust purifying system according to claim 7, further comprising
a second exhaust gas temperature detecting unit that detects an exhaust gas temperature on a downstream side of the oxidizing catalyst, wherein
the fuel controlling section controls an amount of the fuel so that the exhaust gas temperature detected by the second exhaust gas temperature detecting unit is kept at a regenerating temperature for the soot filter.

9. A method for regenerating a soot filter of an exhaust purifying system for an internal combustion engine, the exhaust purifying system including: an air-cooled aftercooler that cools intake air being supercharged by a supercharger; a cooling fan that supplies cooling air to the aftercooler; and the soot filter that collects particulate matter contained in exhaust gas, the method comprising
lowering a rotation speed of the cooling fan when the soot filter is forcibly regenerated using the exhaust gas from the internal combustion engine.

10. The method according to claim 9, wherein
the rotation speed of the cooling fan is lowered when it is decided that the soot filter needs to be regenerated,
fuel is supplied to an upstream side of an oxidizing catalyst being provided on an upstream side of the soot filter when a temperature of the exhaust gas that enters the oxidizing catalyst exceeds an activating temperature in the oxidizing catalyst, and
the supply of the fuel is stopped after combustion of the particulate matter collected in the soot filter.

11. The method according to claim 9, further comprising
determining whether or not to proceed with a process for lowering the rotation speed of the cooling fan depending on at least one of a temperature of outside air, a temperature of the intake air, and a temperature of the exhaust gas.
